# EUROPÄISCHE PATENTSCHRIFT

(11) **EP 1 680 317 B1**
(45) Veröffentlichungstag und Bekanntmachung des Hinweises auf die Patenterteilung: **09.01.2013**
(21) Anmeldenummer: 04766760.5
(22) Anmeldetag: 10.09.2004
(51) Int. Cl.: B62D 1/28, B62D 15/02, G06K 9/00

(54) **FAHRERASSISTENZVERFAHREN UND -VORRICHTUNG AUF DER BASIS VON FAHRSPURINFORMATIONEN**
DRIVER ASSIST METHOD AND DEVICE BASED ON LANE INFORMATION
PROCEDE D'ASSISTANCE AU CONDUCTEUR ET DISPOSITIF FONCTIONNANT SUR LA BASE D'INFORMATIONS DE VOIES DE CIRCULATION

(30) Priorität: 24.10.2003 DE 10349631
(43) Veröffentlichungstag der Anmeldung: 19.07.2006
(73) Patentinhaber: ROBERT BOSCH GMBH, 70442 Stuttgart (DE)
(72) Erfinder: RANDLER, Martin, 70569 Stuttgart (DE)
(86) Internationale Anmeldenummer: PCT/EP2004/052124
(87) Internationale Veröffentlichungsnummer: WO 2005/039957

(56) Entgegenhaltungen:
- EP-A- 1 193 160
- EP-A- 1 285 842
- EP-A- 1 383 100
- WO-A-03/033330
- WO-A-03/058169

## Beschreibung

### Stand der Technik

Die Erfindung betrifft ein Fahrerassistenzverfahren und eine Fahrerassistenzvorrichtung, welche auf der Basis von Fahrspurinformationen arbeitet.

Fahrerassistenzsysteme, welche auf der Basis von Fahrspurinformationen arbeiten, sind im Stand der Technik bekannt. Ein Beispiel für ein solches Fahrassistenzsystem ist ein Warnsystem, welches den Fahrer bei Verlassen der Fahrspur bzw. bei drohendem Verlassen der Fahrspur wart. Ein derartiges System zeigt beispielsweise die EP 1074430 A1, bei welcher mit Bildsensorsystemen die Fahrbahn (Fahrspur), auf der sich das Fahrzeug bewegt, ermittelt wird und der Fahrer gewarnt wird, wenn das Fahrzeug diese Fahrspur verlässt bzw. zu verlassen droht. Ferner sind aus den nicht vorveröffentlichten deutschen Patentanmeldungen 103 11 518.8 mit der Priorität vom 30.04.2002 sowie der 102 38 215.8 mit Priorität vom 11.06.2002 derartige Fahrerassistenzsysteme bekannt. Zur Erfassung der Fahrspur werden in diesen Fällen Bildsensorsysteme verwendet, welche im Fahrzeug eingebaut sind und welche die Szene vor dem Fahrzeug aufnehmen. Aus den aufgenommenen Bildern der Fahrspurrandmarkierungen werden die Grenzen der Fahrspur und damit die Fahrspur selbst ermittelt. Die Ermittlung der Fahrspur hängt demnach wesentlich von den herrschenden Sichtverhältnissen ab, wobei bei schlechten Sichtverhältnissen die bekannten Systeme frühzeitig abzuschalten sind.

Aus der DE 19627 938 A1 ist ein Beispiel für die Erkennung und Modellierung von Fahrbandrandmarkierungen aus Videobildern bekannt, wobei als Modellparameter unter anderem Fahrbahnbreite, Fahrbahnkrümmung, Krümmungsänderung und seitlicher Versatz des Fahrzeugs ermittelt werden.

Die EP 1285 842 A2 zeigt ein Fahrerassistenzverfahren bzw. eine Fahrerassistenzvorrichtung, bei welcher auf der Basis von Fahrspurinformation eine Fahrerinformation erzeugt und/oder ein Lenkeingriff ausgelöst wird. Dabei wird die Fahrspurinformation durch eine Kamera allein auf der Basis von Fahrspurrandmarkierungen gewonnen. WO 03/058169 A zeigt ein System, bei welchem die Lenkung eines Fahrzeugs beeinflusst wird, um das Fahrzeug auf einer vorgegebenen Route zu halten. Dabei werden zur Routenerfassung zwei Systeme eingesetzt, ein Detektor, der die Abweichung von der Route misst, sowie ein Speicher, in welchem die Route segmentweise abgelegt ist. Abhängig von den Informationen bezüglich der Route werden zwei unterschiedliche Lenksysteme beeinflusst, im Falle des Ausfalles des einen Systems übernimmt das andere die Lenkung. Ferner ist vorgesehen, die bei den Routeninformationen zu mischen, wobei wesentlich ist, dass die erfasste Routeninformation den aktuellen Standort repräsentiert, die gespeicherten Segmente eher die zukünftige Route darstellen. EP 1193 160 A2 zeigt ein Fahrerassistenzsystem, bei welchem mittels eines Kamera die Position des Fahrzeugs innerhalb der Fahrspur durch Erfassen der Fahrbahnbegrenzungsmarkierungen einer Straße ermittelt wird. WO 03/033330 A1 zeigt eine Vorgehensweise zur automatischen Steuerung eines Fahrzeugs und Halten des Fahrzeugs in einer Fahrspur, wobei in den Boden eingelassene magnetische Elemente vorgesehen sind, die von entsprechenden Fahrzeugsensoren erfasst werden. Anhand deren Signale wird das Fahrzeug gesteuert.

Die EP-A-1383100 zeigt die Analyse eines Videobilds, welches von einer Vorausfahrkamera aus einem Fahrzeug heraus aufgenommen wurde und die vor dem Fahrzeug befindliche Fahrbahn aufnimmt. Es wird eine Ortsfrequenzanalyse (Spatial frequency) durchgeführt und das Bild in einem hochfrequenten Anteil und einem niederfrequenten Anteil separiert. Aus dem hochfrequenten Signalanteil wird die Straßenkontur ermittelt. Parallel dazu wird mit dem niederfrequenten Signalanteil die Fahrbahnoberfläche unter der Annahme, dass sie konturlos ist, ermittelt. Daraufhin findet eine Datenfusion statt, die aus beiden Informationen ermittelt, wo sich die Straße befindet .

### Vorteile der Erfindung

Durch die Verwendung weiterer Informationen neben oder alternativ zur den Fahrspurrandmarkierungen, aus denen die den Verlauf der Fahrbahn (Fahrspur) beschreibenden Größen abgeleitet werden, wird die Verfügbarkeit eines auf Fahrspurinformationen basierenden Fahrerassistenzsystems deutlich erhöht. Besonders vorteilhaft ist, dass das Fahrerassistenzsystem auch dann verfügbar ist, wenn die Fahrspurrandmarkierungen nicht mehr zuverlässig erkennbar sind. Dies ist vor allem bei schlechten Witterungsbedingungen wie beispielsweise nasser Fahrbahn, bei schneebedeckter Fahrbahn, etc. oder bei schlecht sichtbaren bzw. nicht vorhandenen Fahrspurrandmarkierungen von Bedeutung.

Besonders vorteilhaft ist, den neben den Fahrspurrandmarkierungen oder auch anstelle dieser andere Informationen jeweils einzeln oder in beliebiger Kombination zur Fahrspurbestimmung herangezogen werden, wie beispielsweise die Trajektorie eines oder mehrerer vorausfahrender Fahrzeug, die Fahrspuren eines oder mehrerer vorausfahrender Fahrzeuge beispielsweise bei Regen oder Schnee, die Trajektorie eines oder mehrerer entgegenkommender Fahrzeuge, der Verlauf von Fahrbahnrandbegrenzungen wie beispielsweise Leitplanken, Bordsteine, etc. Aus diesen Daten lassen sich ebenfalls Fahrspurinformationen ableiten (schätzen), die anstelle oder zusammen mit der aus den Fahrspurrandmarkierungen ermittelten Fahrspurinformation die Spurinformation (Spurdaten) für das Fahrerassistenzsystem bilden. Dadurch wird die Fahrspurermittlung sicherer, insbesondere dann, wenn die eigentlichen Fahrspurrandmarkierungen nicht mehr ausreichend erkennbar sind.

Besonders vorteilhaft ist, dass dies ohne zusätzliche Hardware allein auf der Basis der Signale des Bildsensorsystems erfolgt.

Besonders vorteilhaft ist, dass Gütemaße für die Spurdatenerfassung beispielsweise aus dem Bildkontrast ermittelt werden, mit denen die jeweils ermittelten Spurdaten gewichtet und bei der Fusion der dem Fahrerassistenzsystem zur Verfügung gestellten Spurdaten aus den einzelnen Spurdaten berücksichtigt werden. Besonders vorteilhaft in diesem Zusammenhang ist, dass die Bildung eines Gesamtgütemaßes für die Spurdatenerfassung aus den Einzelgütemaßen vorgesehen ist, wobei das Fahrerassistenzsystem abgeschaltet wird, wenn dieses Gesamtgütemaß einen bestimmten Wert unterschreitet. Vorteilhaft ist auch, wenn das Gütemaß aus einem Vergleich der Schätzung mit der Messung abgeleitet wird, wobei insbesondere die Abweichung der Messpunkte von der Schätzlinie (Varianz) herangezogen werden.

Vorteilhaft ist ferner, dass durch die Erhöhung der Verfügbarkeit des Fahrerassistenzsystems insbesondere auch bei schlechten Witterungsbedingungen die Fahrerunterstützung gerade dann funktioniert, wenn der Fahrer diese Unterstützung besonders braucht. Insbesondere bei schlechten Wetterbedingungen wird der Fahrer durch ein Funktionieren des Fahrerassistenzsystems erheblich entlastet.

In besonders vorteilhafter Weise werden bei der Spurdatenermittlung aus anderen Informationen als der Fahrspurrandmarkierungen (was im folgenden auch als Spurdatenschätzung bezeichnet wird) Daten eines globalen Positioniersystems und/oder Daten einer Navigationskarte und/oder neben der Fahrbahn stehende nicht bewegte Objekte, die vom Video-Sensor klassifiziert werden, zur Plausibilisierung der Spurdaten ausgewertet. Dadurch wird die Spurdatenermittlung (Spurdatenschätzung) zuverlässiger.

Besonders vorteilhaft ist auch, dass man bei Verlust von Werten, beispielsweise des Wertes für die Fahrbahnbreite, Werte vor dem Verlust oder Erfahrungswerte bzw. Durchschnittswerte bei der Spurdatenschätzung für diese Größe einsetzt. Damit ist die Funktion der Spurdatenschätzung auch unter diesen Umständen gewährleitstet.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert.
Figur 1 zeigt dabei ein Blockschaltbild eines Fahrerassistenzsystems, insbesondere zur Fahrerwarnung bzw. zur Reaktion bei drohendem Verlassen der Fahrspur durch das Fahrzeug.
Figur 2 zeigt ein grobes Ablaufdiagramm eines ersten Ausführungsbeispiels zur Bereitstellung der Spurdateninformation.

In den Figuren 3 bis 5 sind Flussdiagramme skizziert, welche eine zweite Ausführungsform für die Messung, Schätzung von Spurdaten und deren Auswertung im Fahrerassistenzsystem repräsentieren.

### Beschreibung von Ausführungsbeispielen

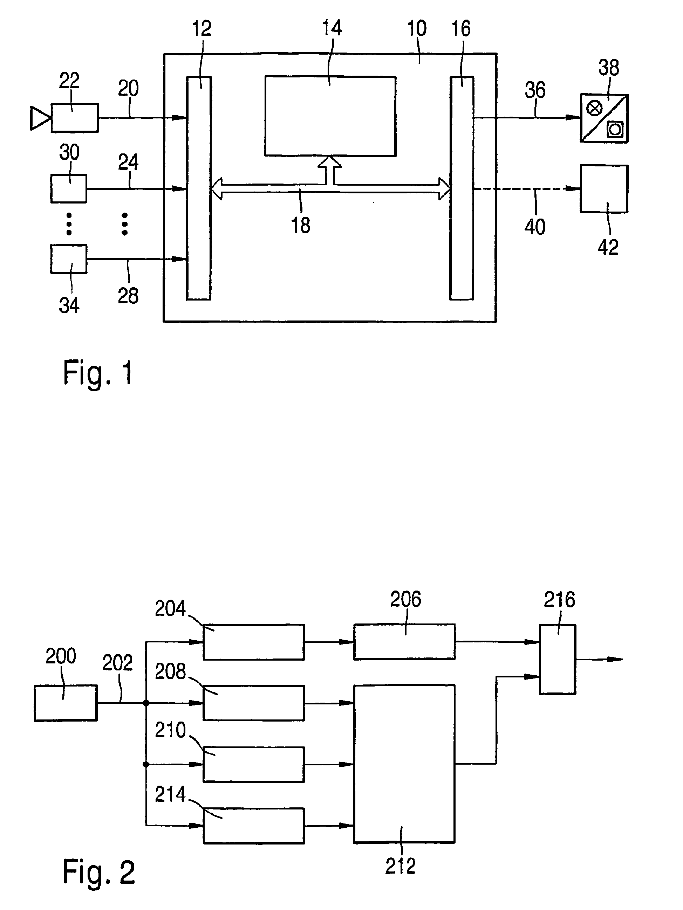

Figur 1 zeigt eine Vorrichtung, welche zur Warnung des Fahrers bzw. zur Reaktion bei Verlassen der Fahrspur durch das Fahrzeug dient. Gezeigt ist eine Steuer- bzw. Auswerteeinheit 10, welche eine Eingangsschaltung 12, einen Mikrocomputer 14 sowie eine Ausgangsschaltung 16 aufweist. Diese Elemente sind mit einem Bussystem zum gegenseitigen Datenaustausch miteinander verbunden. Der Eingangsschaltung 12 werden Eingangsleitungen von verschiedenen Messeinrichtungen zugeführt, über die Messsignale bzw. Messinformationen übermittelt werden. Eine erste Eingangsleitung 20 verbindet die Eingangsschaltung 12 mit einem Bildsensorsystem 22, welches im Fahrzeug angeordnet ist und welches die Szene vor dem Fahrzeug aufnimmt. Entsprechende Bilddaten werden über die Eingangsleitung 20 übermittelt. Ferner sind Eingangsleitungen 24 bis 26 vorgesehen, welche die Eingangsschaltung 12 mit Messeinrichtungen 30 bis 34 verbinden. Bei diesen Messeinrichtungen handelt es sich beispielsweise um Messeinrichtungen zur Messung der Fahrzeuggeschwindigkeit, zur Erfassung des Lenkwinkels sowie zur Erfassung weiterer Betriebsgrößen des Fahrzeugs, welche im Zusammenhang mit der Funktion des Fahrerassistenzsystems Bedeutung haben. Ferner werden über diese Eingangsleitungen Kartendaten und/oder Positionsdaten des Fahrzeugs zugeführt. Über die Ausgangsschaltung 16 und die Ausgangsleitung 36 wird wenigstens eine Warneinrichtung 38 angesteuert, beispielsweise eine Warnlampe und/oder ein Lautsprecher für eine akustische Warnung und/oder für eine Sprachausgabe und/oder ein Display für die Anzeige eines Bildes, mit deren Hilfe der Fahrer vor dem drohenden Verlassen der Fahrspuren informiert bzw. gewarnt wird. Auch eine haptische Warnung (z.B. Lenkradvibration) kann vorgesehen sein. In einem anderen Ausführungsbeispiel ist alternativ oder zusätzlich vorgesehen, über die Ausgangsschaltung 16 und eine Ausgangsleitung 40 ein Stellsystem 42 anzusteuern, welches automatisch beispielsweise durch Eingriff in die Lenkung des Fahrzeugs das Fahrzeug wieder in die Spur zurückführt und so das Verlassen der Fahrspur verhindert.

Spurdaten werden in einer Ausführung entsprechend der im eingangs genannten Stand der Technik ermittelt, wobei Fahrbahnmodellparameter durch Analyse des erfassten Bildes nach Maßgabe einer die Kameradaten umfassenden Abbildungsvorschrift ermittelt werden und an das gemessene Bild angepasst werden. So analysiert das Fahrerassistenzsystem das vom Bildsensor erfasste Bild und ermittelt Objekte im Bild, insbesondere die Fahrspurrandmarkierungen (z.B. Mittellinien, etc.). Die Verläufe der ermittelten Fahrspurrandmarkierungen (links und rechts) werden dann mathematisch durch Funktionen angenähert, z.B. als Klothoidenmodell, beispielsweise angenähert durch ein Polynom zweiter Ordnung. Parameter dieser Gleichungen sind z.B. Krümmung und Krümmungsänderung, der Abstand des Eigenfahrzeugs zur Randmarkierungen nach links und nach rechts. Ferner kann der Winkel zwischen der Tangente der berechneten Spur und der Bewegungsrichtung des eigenen Fahrzeugs ermittelt werden. Die auf diese Weise ermittelte Fahrspurinformation wird dann dem Assistenzsystem zugeführt, welches anhand der Eigentrajektorie(n) des Fahrzeugs (ermittelt z.B. auf der Basis des Lenkwinkels) ein drohendes Überschreiten der Fahrspur erkennt und zum geeigneten Zeitpunkt den Fahrer warnt bzw. Gegenmaßnahmen einleitet.

Solange die Fahrspunandmarkierungen im aufgenommenen Bild deutlich zu erkennen sind, ist die Berechnung dieser Spurdaten wie oben geschildert genau und zuverlässig. Bei schlechten Witterungsbedingungen und/oder schlechter Sicht und/oder schlecht sichtbaren bzw. nicht vorhandenen Spurrandmarkierungen kann die beschriebene Vorgehensweise ungenau sein bzw. kein Ergebnis liefern können. Die auf Basis der Spurdaten arbeitenden Systeme wären somit in solchen Situationen abzuschalten. Nachfolgend wird daher eine Erweiterung der Spurdatenerfassung und damit eine Erweiterung des damit verbundenen Fahrerassistenzsystems beschrieben, welche auch bei schlechten Witterungsbedingungen und/oder schlecht sichtbaren bzw. nicht vorhandenen Spurrandmarkierungen durch Berechnen einer Fahrspur (Schätzen einer Fahrspur) auf der Basis von anderen Informationen aus dem aufgenommen Bild als die Spurrandmarkierungen ein weiteres Funktionieren des Fahrerassistenzsystems erlaubt, wobei kein zusätzlicher Aufwand an Hardwareausstattung entsteht.

In Figur 2 ist ein Ablaufdiagramm dargestellt, welches ein erstes Ausführungsbeispiel bzgl. der oben genannten Erweiterung der Spurdatenerfassung darstellt Das Ablaufdiagramm repräsentiert dabei auf dem Mikrocomputer in der Steuer- bzw. Auswerteeinheit 10 ablaufende Programme.

Ausgangspunkt ist ein Bildsensor 200, der im Fahrzeug oder am Fahrzeug angebracht ist und die Szene vor dem Fahrzeug aufnimmt. Entsprechende Bildsignale werden über die Leitungen 202 an die Auswerteeinheit 10 weitergeleitet. Neben der oben geschilderten Spurdatenberechnung auf der Basis von Spurrandmarkierungen wertet die Auswerteeinheit 10 die übermittelten Bilder wie folgt aus.

Zunächst werden wie oben beschrieben im Modul 204 die Fahrspurrandmarkierungen im Bild erkannt und dann im Modul 206 die Spurdaten berechnet. In einem zweiten Modul 208 werden im dargestellten Ausführungsbeispiel der Verlauf der Spuren eines oder mehrerer vorausfahrender Fahrzeug ermittelt, die z.B. auf nasser Fahrbahn, im Schnee, etc. zu sehen sind. Dies wird durch Analyse und Objekterkennung im Bild z.B. auf der Basis der Grauwerte erreicht (z.B. Gradientenauswertung). Dabei wird im Rahmen dieser Darstellung unter Objekt auch die Fahrbahnrandmarkierung und/oder die Fahrbahnrandbebauung (Leitplanken, etc.) verstanden. Der auf diese Weise erkannte Spurenverlauf wird dann analog zum oben Genannten mathematisch mit den genannten Parametern beschrieben. Dabei wird die Fahrbahnbreite (geschätzt, aus Kartendaten, etc.) mit berücksichtigt.

Im Modul 210 wird anhand aufeinander folgender Bilder die Trajektorie eines oder mehrerer vorausfahrender und/oder von entgegenkommender Fahrzeuge aufgezeichnet. Dies erfolgt durch Objekterkennung und -verfolgung in den einzelnen Bildern, wobei aus den Veränderungen des Objekts die Parameter abgeleitet werden. Die Fahrbahnbreite bzw. der Versatz zwischen Gegenverkehr und Verkehr auf der eigenen Spur werden als Schätzwerte berücksichtigt. Alternativ oder Ergänzend werden im Modul 210 stehende Objekte am Fahrbahnrand, z.B. Leitplanken, ausgewertet und die Trajektorie auf der Basis dieser Information bestimmt.

Ferner wird auf der Basis der vom Bildsensor gelieferten Bilder beispielsweise auf der Basis der Bildkontraste im Bereich des jeweiligen ausgewerteten Objekts ein Gütemaß (z.B. Zahl zwischen 0 und 1) für die jeweiligen Spurdaten ermittelt und jeder ermittelten Spurdaten mitgegeben. Eine alternative oder ergänzende Maßnahme zur Ermittlung des Gütemaß ist ein Vergleich der Schätzung mit der Messung, wobei insbesondere die Abweichung der Messpunkte von der Schätzlinie (Varianz) herangezogen werden. Ist die Varianz groß, wird ein kleines Gütemaß angenommen, ist sie klein, wird ein hohes Gütemaß angegeben.

Die auf diese Weisen ermittelten zusätzlichen Spurdaten werden im Modul Spurdatenschätzung 212 dann zur Bildung eines Satzes von geschätzten Spurdaten gegebenenfalls unter Berücksichtigung der Gütemaße ausgewertet. Dies erfolgt dabei in einer bevorzugten Ausführung durch Gewichtung der auf verschiedene Art und Weisen ermittelten Spurdaten mit dem zugeordneten ermittelten Gütemaß und der Berechnung der resultierenden Spurdaten aus diesen gewichteten Spurdaten der verschiedenen Quellen, z.B. durch Mittelwertbildung. Entsprechend wird ein resultierendes Gütemaß bestimmt.

In einer bevorzugten Ausführungsform ist ferner ein globales Positioniersystem bzw. Kartendaten 214 vorgesehen, deren Informationen im Rahmen der Spurdatenschätzung als Plausibilitätsüberprüfung verwertet wird. Beispielsweise wird überprüft, ob anhand dieser Kartendaten bzw. Positionierdaten die ermittelten Spurdaten mit den Kartendaten im Rahmen der geforderten Genauigkeit übereinstimmen oder nicht. Im letzteren Fall wird abhängig von einem Vergleich der Schätzdaten mit den Kartendaten ein Gütemaß für die Spurdaten festgelegt, wobei das Gütemaß bei größeren Abweichungen geringer ist als bei kleineren Abweichungen. Können bestimmte Spurdaten aus den zu Verfügung stehenden Daten nicht ermittelt werden, werden Erfahrungswerte oder Werte vor dem Verlust der Information herangezogen. Ist beispielsweise die Breite der Fahrbahn aus den aktuell vorliegenden Informationen nicht ermittelbar, so werden entweder Erfahrungswerte für die Fahrbahnbreite oder die bei der letzten Spurdatenschätzung ermittelten Werte für die Fahrbahnbreite verwendet.

Die auf diese Weise geschätzten Spurdaten werden dann einer Spurdatenfusion 216 zugeführt, in der die geschätzten Spurdaten mit resultierendem Gütemaß und die berechneten Spurdaten (ebenfalls mit Gütemaß) aufgrund der Fahrspurrandmarkierungen zu den für die Funktion verwendeten Spurdaten zusammengeführt werden. Auch hier findet die Datenfusion unter Berücksichtigung der Gütemaße statt, beispielsweise indem bei sehr geringem Gütemaß die entsprechenden Daten verworfen, bei sehr hohem Gütemaß einer der Berechnungswege nur diese Daten verwendet werden, im Zwischenbereich eine Mittelwertbildung stattfindet. Auch kann entsprechend ein resultierendes Gütemaß ermittelt werden.

Die auf diese Weise ermittelten Spurdaten werden der nachfolgenden Auswerteeinheit zur Verfügung gestellt, die dann auf der Basis dieser Spurdaten beispielsweise den Fahrer bei drohendem Verlassen der Fahrspur warnt.

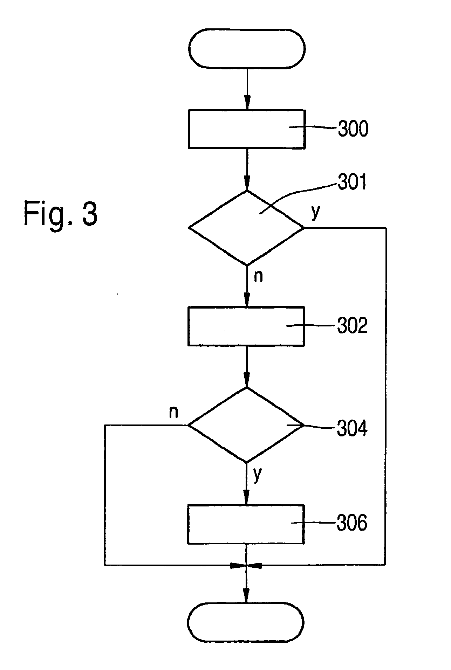

In den Figuren 3 bis 5 ist ein weiteres Ausführungsbeispiel der vorgeschlagenen Vorgehensweise als Flussdiagramme dargestellt. Die Flussdiagramme repräsentieren dabei Programme oder Programmteile von Programmen für den Mikrocomputer, der in der Auswerteeinheit 10 angeordnet ist.

In Figur 3 ist ein Beispiel dargestellt, welches eine Auswertung der ermittelten Spurdaten am Beispiel eines Systems zur Warnung vor Verlassen der Fahrspur darstellt. Zunächst werden im Schritt 300 die gemessen und/oder geschätzten oder aus einer Fusion der beiden abgeleiteten Spurdaten bzw. die Abschaltinformation (siehe unten) eingelesen. Im Schritt 301 wird überprüft, ob eine Abschaltinformation vorliegt. In diesem Fall wird das Programm beendet und zum nächsten Zeitpunkt erneut durchlaufen. Im anderen Fall wird im Schritt 302 aufgrund von FahrzeuggröBen wie Lenkwinkel, Gierrate, Querbeschleunigung, Fahrzeuggeometriedaten, etc. die Ist-Trajektorien des Fahrzeugs und daraus der zukünftige Kurs des Fahrzeugs (linke und/oder rechte Fahrzeugseite) als mathematische Funktion (unter der Annahme dass das Fahrzeug den aktuellen Kurs, ggf. unter Berücksichtung üblicher Fahrerreaktionen beibehält) berechnet. Daraufhin wird im Schritt 304 durch Vergleich der ermittelten Spurdaten sowie mit dem zukünftigen Kurs des Fahrzeugs (auf einer oder auf beiden Fahrspurseiten) ein drohendes Verlassen der Fahrspur abgeleitet (Schnittpunkte der mathematischen Funktionen in der Zukunft). Ist dies der Fall, so wird gemäß Schritt 306 der Fahrer akustisch und/oder optisch und/oder haptisch gewarnt, gegebenenfalls in einem Ausführungsbeispiel durch Lenkeingriff das Fahrzeug in der Spur gehalten. Ergibt der Vergleich, dass kein Verlassen der Fahrspur zu befürchten ist, unterbleibt die Warnung bzw. die geschilderte Aktion.

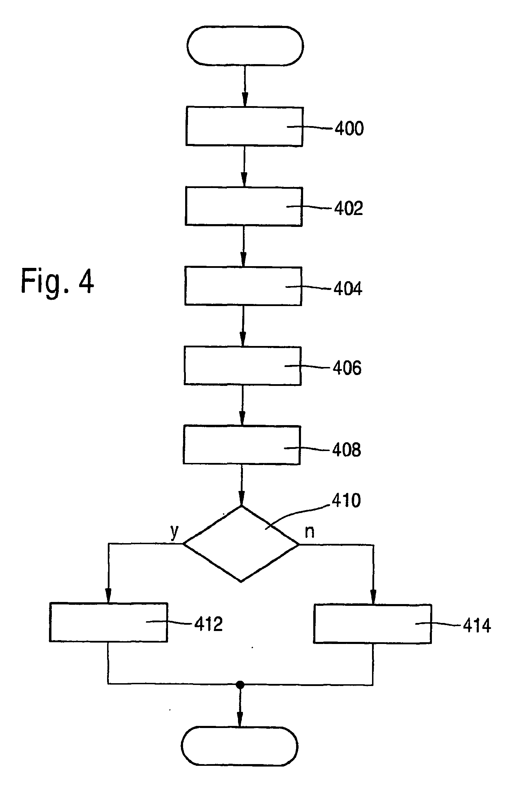

Figur 4 zeigt eine Vorgehensweise zur Spurdatenermittlung auf der Basis zur Verfügung stehender geschätzter Spurdaten. Zunächst wird im Schritt 400 aus dem vom Videosensor 200 erfassten Bild mit Methoden der Bildanalyse, z.B. anhand der Bildkontraste und Vergleich mit gespeicherten Modellen, eine Erkennung der Fahrspurrandmarkierungen durchgeführt. Ferner wird im Schritt 402 aus dem Kontrast des Bildes, insbesondere aus dem Kontrast im Bereich der Fahrspurrandmarkierung, und/oder der Varianz der Mess- und der Schätzwerte ein Gütemaß gebildet. Im bevorzugten Ausführungsbeispiel ist dies ein Wert zwischen 0 und 1, wobei das Gütemaß umso höher ist, je höher der Kontrast des Bildes bzw. je kleiner die Varianz ist. Im darauf folgenden Schritt 404 wird dann auf der Basis der erkannten Fahrspurrandmarkierungen die Spurdaten berechnet, insbesondere ein Polynom zweiter Ordnung gebildet und die Spurparameter Krümmung und Krümmungsänderung sowie Abstand nach links und rechts zum eigenen Fahrzeug errechnet, so dass Spurdaten für den linken und für den rechten Rand vorliegen. Im Schritt 406 werden die Spurdaten aus der Spurdatenschätzung (die ebenfalls für rechts und links vorliegen) samt dem damit verbundenen Gütemaß eingelesen. Im Schritt 408 erfolgt dann die Fusion dieser Spurdaten für jede Seite einzeln zur Bildung der resultierenden Spurdaten. Dies erfolgt unter Berücksichtigung der ermittelten Gütemaße. So wird beispielsweise bei einem hohen Gütemaß (beispielsweise > 0,75) bei der Erfassung der Fahrspurrandmarkierungen auf die Berücksichtigung der Spurdatenschätzung vollständig verzichtet. Ebenso kann es Ausführungsbeispiele geben, in der im umgekehrten Fall bei einem hohen Gütemaß der Spurdatenschätzung und einem geringen Gütemaß der Fahrspurrandmarkierungserkennung (< beispielsweise 0,3) auf die Spurdaten aus der Schätzung herangezogen werden. In anderen Fällen erfolgt die Fusion beispielsweise im Rahmen einer gewichteten Mittelwertbildung aus den zur Verfügung stehenden Spurdaten, wobei die Wichtung auf der Basis der Gütemaße erfolgt. Ebenso wie bei den Spurdaten werden aus den Gütemaße ein resultierendes Gütemaß ermittelt. Im Schritt 410 wird überprüft, ob dieses eine bestimmte Größe erreicht hat, beispielsweise 0,5. Ist dies nicht der Fall, wird anstelle der Spurdaten eine Abschaltinformation im Schritt 412 an die nachfolgenden Systeme geschickt, derart, dass keine verlässlichen Spurdaten ermittelt werden können. Im anderen Fall werden die resultierenden Spurdaten an die nachfolgende Anwendung weitergegeben (Schritt 414).

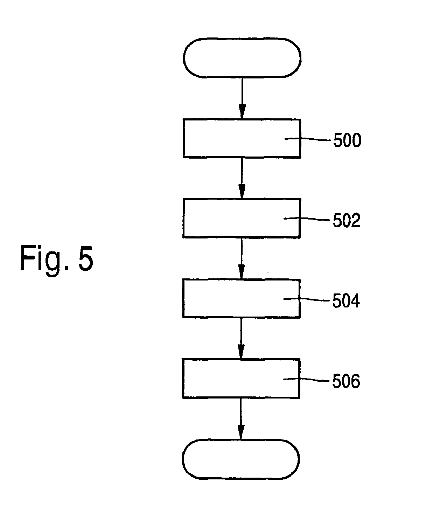

In Figur 5 ist ein Flussdiagramm dargestellt, welches ein Ausführungsbeispiel zur Ermittlung der geschätzten Spurdaten skizziert. Auch hier wird im ersten Schritt 500 das vom Videosensor ermittelte Bild analysiert. Dabei werden verschiedene Objekte im Bild erkannt, beispielsweise vorausfahrende Fahrzeuge, entgegenkommende Fahrzeuge, stehende Objekte wie z.B. Leitplanken, die den Fahrbahnrand kennzeichnen, sowie nicht bewegte Objekte außerhalb der Fahrbahn, beispielsweise Bäume, etc. Die Analyse des Bildes und die Objekterkennung sowie Klassifizierung der Objekte erfolgt dabei nach Maßgabe eines entsprechenden Bildanalyseverfahrens z.B. auf der Basis der im Bild vorhandenen Kontraste und von Konturenvergleichen. Im darauf folgenden Schritt 502 werden aus den Kontrasten der Bildausschnitte, in denen die ermittelten Objekte liegen, und/oder aus der Varianz der entsprechenden Mess- und der Schätzwerte jeweils Gütemaße für die Objekterkennung ermittelt. Jedes erkannte Objekt ist dabei mit einem entsprechenden Gütemaß (z.B. einem Wert zwischen 0 und 1) versehen.

Im darauf folgenden Schritt 504 werden aus den Objekten Spurdaten abgeleitet. Dies erfolgt bei vorausfahrenden oder entgegenkommenden Fahrzeugen durch Analyse aufeinander folgender Bilder, aus denen die Bewegung der Fahrzeuge, die Richtung und deren Trajektorien in der Vergangenheit ermittelt werden. Die auf diese Weise ermittelten Trajektorien werden dann zur Bestimmung eines Fahrbahnverlaufs herangezogen. Insbesondere geeignet hierfür ist der Gegenverkehr, dessen Trajektorie in der Vergangenheit die vom Fahrzeug zu befahrene Fahrspur repräsentiert. Unter Berücksichtigung des lateralen Abstands zwischen den vorausfahrenden und den entgegenkommenden Fahrzeugen wird der Verlauf der eigenen Fahrspur ermittelt. Daraus werden wiederum die oben genannten Spurdaten aus der Trajektorie und einer angenommen oder bestimmten Fahrspurbreite ermittelt.

Bei Regen oder schlechter Sicht oder auch bei Schnee lässt sich aus dem aufgenommen Bild die dann sichtbare Spur des voranfahrenden Fahrzeuges auswerten. Aus der Bildanalyse lassen sich Trajektorien berechnen, die unter Berücksichtigung einer angenommenen Spurbreite in etwa dem Verlauf der Fahrbahnrandmarkierungen entsprechen. Die Spurdaten werden auch hier aus den im Bild erkannten Objekten als mathematische Funktion dargestellt

Als weitere Möglichkeit lassen sich nicht bewegte Objekte zur Schätzung von Spurdaten auswerten, insbesondere Leitplanken oder andere Begrenzungen, die die Fahrbahn zumindest auf einer Seite begrenzen. Der Verlauf dieser Begrenzungen lässt sich im Bild analysieren und daraus eine Trajektorie berechnen. Unter Berücksichtigung von üblichen Seitenabständen und Fahrbahnbreiten lassen sich dann Spurdaten (rechts und links) ermitteln.

Wie oben erwähnt wird jedem ermittelten Objekt ein Gütemaß zugeordnet, welches entsprechend den auf der Basis dieses Objekts ermittelten Spurdaten beigegeben wird. Ferner können nicht bewegte Objekte, die vom Videosensor klassifiziert werden und nicht befahrbare Flächen markieren, zur Plausibilitätsüberprüfung der geschätzten Spur dienen. Wird erkannt, dass die geschätzte Spur im Bereich solcher nicht bewegter Objekte sich befindet, ist von einer fehlerhaften Spurschätzung auszugehen.

Die ermittelten Spurdaten sowie das resultierende Gütemaß werden dann zur weiteren Auswertung abgegeben (vgl. Figur 4).

In einer bevorzugten Ausführungsform wird die Spurschätzung nur bei erkannten schlechten Witterungsbedingungen durchgeführt, während bei guten Witterungsbedingungen und guter Sicht auf die Schätzung verzichtet wird. Schlechte Witterungsbedingungen werden dabei erkannt, wenn der Scheibenwischer über ein bestimmtes Maß hinaus aktiv ist und/oder wenn ein Regensensor Regen erkennt, und/oder wenn der Videosensor eine geringe Sichtweite ermittelt.

Ferner ist in einem Ausführungsbeispiel vorgesehen, die Güte der Spurschätzung zu verringern, wenn ein Abbiege- oder Spurwechselvorgang des vorherfahrenden Fahrzeuges erkannt wird.

## Patentansprüche

1. Fahrerassistenzverfahren auf der Basis von Fahrspurinformation, wobei abhängig von der Fahrspurinformation eine Fahrerinformation **oder** ein **Lenkeingriff** ausgelöst wird, wobei mittels eines Bildes einer Kamera die Fahrspurinformation ermittelt wird und die Fahrspurinformation aus Spurdaten besteht, **und** erste Spurdaten auf der Basis der Bildinformation über Fahrspurrandmarkierungen ermittelt, wenden **und** zusätzliche Spurdaten auf der Basis anderer, auf der Basis des H Bildes der Kamera ermittelten Informationen, **alternativ zu Fahrspurrandmarkierungen,**
nämlich auf Basis wenigstens eines der folgenden Objekte ermittelt wenden: **wenigstens ein vorausfahrendes oder entgegenkommendes Fahrzeug oder Fahrspuren wenigstens eines vorausfahrenden Fahrzeugs oder Fahrbahnrandbegrenzungen oder Leitplanken oder dem Bordstein oder Fahrbahnrandbebauungen,**
aus denen der Verlauf der Fahrbahn abgeleitet wird, ermittelt werden, und dass die ersten Spurdaten und die zusätzlichen Spurdaten zu den für das Fahrerassistenzverfahren verwendeten Spurdaten zusammengeführt werden.

2. Verfahren nach Anspruch 1, **dadurch gekennzeichnet, dass** die Fahrspurinformation anhand der Fahrspurrandmarkierungen mittels eines Bildes einer Kamera ermittelt wird.

3. Verfahren nach einem der vorhergehenden Ansprüche, **dadurch gekennzeichnet, dass** die Fahrspurinformation auf der Basis von im Bild einer Kamera erkannten Objekten erfolgt.

4. Verfahren nach einem der vorhergehenden Ansprüche, **dadurch gekennzeichnet, dass** jede Information, aus der die Fahrspurinformation abgeleitet wird, mit einem Gütemaß versehen ist.

5. Verfahren nach einem der vorhergehenden Ansprüche, **dadurch gekennzeichnet, dass** bei der Ermittlung der Fahrspurinformation die jeweiligen Gütemaße berücksichtigt werden.

6. Verfahren nach einem der vorhergehenden Ansprüche, **dadurch gekennzeichnet, dass** das Gütemaß aus dem Kontrast des Bildes abgeleitet wird und/oder aus einem Vergleich der Schätzung mit der Messung, wobei insbesondere die Abweichung der Messpunkte von der Schätzlinie herangezogen werden.

7. Verfahren nach einem der vorhergehenden Ansprüche, **dadurch gekennzeichnet, dass** die Fahrspurinformation sowie das Gütemaß an nachfolgende Auswerteeinheiten abgegeben werden.

8. Fahrerassistenzvorrichtung auf der Basis von Fahrspurinformationen, mit einer Auswerteeinheit, welche auf der Basis eines ermittelten Bildes einer Kamera Fahrspurinformationen ermittelt, wobei abhängig von der Fahrspurinformation eine Fahrerinformation **oder ein Lenkeingriff** ausgelöst wird, wobei die Fahrspurinformationen aus Spurdaten bestehen, **und** die Auswerteeinheit zur Ermittlung von ersten Spurdaten auf der Basis der Bildinformation über Fahrspurrandmarkierungen ausgestaltet ist, **und** sie H zusätzliche Spurdaten auf der Basis anderer, auf der Basis des Bildes der Kamera ermittelten Informationen, **alternativ zu Fahrspurrandmarkierungen,**
**nämlich auf Basis wenigstens eines der folgenden Objekte ermittelt wenden: wenigstens ein vorausfahrendes oder entgegenkommendes Fahrzeug oder Fahrspuren wenigstens eines vorausfahrenden Fahrzeugs oder Fahrbahnrandbegrenzungen oder Leitplanken oder dem Bordstein oder Fahrbahnrandbebauungen,**
aus denen der Verlauf der Fahrbahn abgeleitet wird, ermittelt, und dass sie die ersten Spurdaten und die zusätzlichen Spurdaten zu den für das Fahrerassistenzverfahren verwendeten Spurdaten zusammenführt.

9. Fahrerassistenzvorrichtung auf der Basis von Fahrspurinformationen, mit einer Auswerteeinheit, welche auf der Basis eines ermittelten Bildes eine Fahrspurinformationen ermittelt, **dadurch gekennzeichnet, dass** die Auswerteeinheit ein Gütemaß für die Fahrspurinformation ermittelt.

## Claims

1. Driver assistance method based on lane information, wherein a driver information or a steering intervention is triggered as a function of the lane information, wherein the lane information is determined by means of an image of a camera, and the lane information is composed of lane data, and first lane data is determined on the basis of the image information by means of lane edge marks, and additional lane data is determined on the basis of other information determined on the basis of the image of the camera, as an alternative to lane edge marks, specifically on the basis of at least one of the following objects: at least one vehicle travelling ahead or one oncoming vehicle or lanes of at least one vehicle travelling ahead or carriageway edge boundaries or crash barriers or the kerb or structures at the edge of the carriageway,
from which the profile of the carriageway is derived, and wherein the first lane data and the additional lane data are combined to form the lane data used for the driver assistance method.

2. Method according to Claim 1, **characterized in that** the lane information is determined on the basis of the lane edge marks by means of an image of a camera.

3. Method according to one of the preceding claims, **characterized in that** the lane information is generated on the basis of objects detected in the image of a camera.

4. Method according to one of the preceding claims, **characterized in that** any information from which the lane information is derived is provided with a quality measure.

5. Method according to one of the preceding claims, **characterized in that** the respective quality measures are taken into account in the determination of the lane information.

6. Method according to one of the preceding claims, **characterized in that** the quality measure is derived from the contrast of the image and/or from a comparison of the estimate with the measurement, wherein in particular the deviation of the measurement points from the estimated line is used.

7. Method according to one of the preceding claims, **characterized in that** the lane information and the quality measure are output to successive evaluation units.

8. Driver assistance device based on lane information, having an evaluation unit which determines lane information on the basis of a determined image of a camera, wherein a driver information or a steering intervention is triggered as a function of the lane information, wherein the lane information is composed of lane data, and the evaluation unit is designed to determine first lane data on the basis of the image information by means of lane edge marks, and said evaluation unit determines additional lane data on the basis of other information determined on the basis of the image of the camera, as an alternative to lane edge marks, specifically on the basis of at least one of the following objects: at least one vehicle travelling ahead or one oncoming vehicle or lanes of at least one vehicle travelling ahead or carriageway edge boundaries or crash barriers or the kerb or structures at the edge of the carriageway,
from which the profile of the carriageway is derived, and wherein said evaluation unit combines the first lane data and the additional lane data to form the lane data used for the driver assistance method.

9. Driver assistance device based on lane information, having an evaluation unit which determines lane information on the basis of an acquired image, **characterized in that** the evaluation unit determines a quality measure for the lane information.

## Revendications

1. Système d'assistance au conducteur basé sur des informations concernant la bande de circulation et dans lequel une information est donnée au conducteur ou une action est déclenchée sur la direction en fonction des informations concernant la bande de circulation,
l'information concernant la bande de circulation étant déterminée au moyen d'une image d'une caméra et l'information concernant la bande de circulation étant constituée de données de bande de circulation,
des premières données concernant la bande de circulation étant déterminées sur la base des informations d'image par l'intermédiaire des marquages des bordures de la bande de circulation,
des données supplémentaires basées sur d'autres informations déterminées sur la base de l'image de la caméra étant déterminées en variante au marquage des bordures de la bande de circulation, c'est-à-dire sur la base d'au moins l'un des objets suivants :
au moins un véhicule circulant en avant ou venant en sens inverse,
les traces de circulation d'au moins un véhicule circulant en avant,
les limites de bordure de la chaussée,
des panneaux de guidage,
la pierre de bordure de la chaussée ou
des ouvrages situés sur le bord de la chaussée,
à partir desquels l'évolution de la chaussée est dérivée,
les premières données de bande de circulation et les données supplémentaires de bande de circulation étant rassemblées pour fournir les données de bande de circulation utilisées pour le procédé d'assistance au conducteur.

2. Procédé selon la revendication 1, **caractérisé en ce que** l'information concernant la bande de circulation est déterminée à l'aide des marquages des bordures de bande de circulation au moyen d'une image d'une caméra.

3. Procédé selon l'une des revendications précédentes, **caractérisé en ce que** l'information concernant la bande de circulation est crée sur la base d'objets reconnus dans l'image d'une caméra.

4. Procédé selon l'une des revendications précédentes, **caractérisé en ce que** chaque information de laquelle l'information concernant la bande de circulation est dérivée est dotée d'une mesure de qualité.

5. Procédé selon l'une des revendications précédentes, **caractérisé en ce que** lors de la détermination de l'information concernant la bande de circulation, sa mesure de qualité est prise en compte.

6. Procédé selon l'une des revendications précédentes, **caractérisé en ce que** la mesure de qualité est dérivée du contraste de l'image et/ou d'une comparaison de l'estimation avec la mesure, l'écart entre les points de mesure et la ligne estimée étant pris en compte.

7. Procédé selon l'une des revendications précédentes, **caractérisé en ce que** l'information concernant la bande de circulation et la mesure de qualité sont délivrées à des unités d'évaluation situées en aval.

8. Dispositif d'assistance au conducteur sur la base d'informations concernant la bande de circulation, le dispositif présentant une unité d'évaluation qui détermine des informations concernant la bande de circulation à partir d'une image saisie par une caméra, une information étant donnée au conducteur ou une action étant déclenchée sur la direction en fonction des informations concernant la bande de circulation,
l'information concernant la bande de circulation étant constituée de données de bande de circulation,
l'unité d'évaluation étant configurée pour déterminer des premières données concernant la bande de circulation sur la base des informations d'image par l'intermédiaire des marquages des bordures de la bande de circulation,
des données supplémentaires basées sur d'autres informations déterminées sur la base de l'image de la caméra étant déterminées en variante au marquage des bordures de la bande de circulation, c'est-à-dire sur la base d'au moins l'un des objets suivants :
au moins un véhicule circulant en avant ou venant en sens inverse,
les traces de circulation d'au moins un véhicule circulant en avant,
les limites de bordure de la chaussée,
des panneaux de guidage,
la pierre de bordure de la chaussée ou
des ouvrages situés sur le bord de la chaussée,
à partir desquels l'évolution de la chaussée est dérivée,
l'unité d'évaluation rassemblant les premières données de bande de circulation et les données supplémentaires de bande de circulation pour fournir les données de bande de circulation utilisées pour le procédé d'assistance au conducteur.

9. Dispositif d'assistance au conducteur sur la base d'informations concernant la bande de circulation, doté d'une unité d'évaluation qui, sur la base d'une image saisie, détermine des informations concernant la bande de circulation,
**caractérisé en ce que**
l'unité d'évaluation détermine une mesure de la qualité de l'information concernant la bande de circulation.
